# EUROPÄISCHE PATENTSCHRIFT

(11) **EP 2 072 220 B1**
(45) Veröffentlichungstag und Bekanntmachung des Hinweises auf die Patenterteilung: **15.06.2011**
(21) Anmeldenummer: 08020856.4
(22) Anmeldetag: 01.12.2008
(51) Int. Cl.: B29C 49/12

(54) **Reckstange und eine Vorrichtung und ein Verfahren zur Herstellung von Hohlkörpern mittels der Reckstange**
Stretch rod and a method and an apparatus for manufacturing hollow bodies using the stretch rod
Tige d'étirage et un dispositif et un procédé destinés à la fabrication de corps creux en utilisant la tige d'étirage

(30) Priorität: 18.12.2007 DE 102007061659
(43) Veröffentlichungstag der Anmeldung: 24.06.2009
(73) Patentinhaber: Krones AG, 93073 Neutraubling (DE)
(72) Erfinder: Schuster, Gerhard, 93101 Pfakofen (DE); Knapp, Peter, 84098 Schmatzhausen (DE)
(74) Vertreter: Grünecker, Kinkeldey, Stockmair & Schwanhäusser Anwaltssozietät

(56) Entgegenhaltungen:
- EP-A- 0 324 102
- DE-A1- 2 116 318
- GB-A- 2 138 735
- US-A- 3 550 200
- US-A1- 2007 132 160
- DATABASE WPI Week 197740 Thomson Scientific, London, GB; AN 1977-71541Y XP002524903 -& JP 52 101265 A (YOSHINO KOGYOSHO CO LTD) 25. August 1977 (1977-08-25)

## Beschreibung

Die Erfindung betrifft eine Reckstange und eine Vorrichtung zum Gebrauch bei der Umformung eines Vorformlings in einen Hohlkörper. Weiterhin betrifft die Erfindung ein Verfahren zur Umformung eines Vorformlings in einen Hohlkörper.

Aus dem Stand der Technik, insbesondere der Offenlegungsschrift DE 10 2004 018 146 A1 sind ein Verfahren und eine Vorrichtung zur Blasformung von Behältern bekannt, bei denen Vorformlinge aus einem thermoplastischen Material nach einer Temperierung innerhalb einer Blasform jeweils einerseits durch eine Reckstange gereckt, andererseits durch Druckluftzufuhr ins Innere der Vorformlinge zu Behältern aufgeblasen werden. Die Druckluftzufuhr erfolgt durch die Reckstange hindurch. Zudem wird in der genannten Schrift die Möglichkeit erwähnt, Druckgas aus dem geformten Behälter durch die Reckstange hindurch abzuleiten und dabei durch Bedingen geeigneter Strömungsrichtungen einen zusätzlichen Kühleffekt zu erreichen.

Die Druckschrift US 2007/0132160 A1 offenbart ein Verfahren und eine Vorrichtung zum Formen thermoplastischer Behälter, insbesonder Flaschen, mit kronblattförmigem Boden. Gemäß dem Dokument JP 52-101 265 werden Polyesterflaschen unter Verwendung von vorgeformtem Polyestermaterial hergestellt, in das eine Stange eingeführt wird, um durch einen Luftkanal Druckluft einzublasen.

Unter dem genannten Stand der Technik ist die Materialausbeute im Kontaktbereich von Reckstangenkuppe und Vorformling oft ungenügend. Bei hohen Anforderungen an die Behälterqualität bzw. die Materialausbeute ist es dagegen erforderlich, das Material auch in diesem Kontaktbereich zu verstrecken.

Die Aufgabe wird gelöst durch eine Reckstange gemäß Anspruch 1, ein Verfahren gemäß Anspruch 11 und eine Vorrichtung gemäß Anspruch 15. Bevorzugte Ausführungsformen sind in den Unteransprüchen offenbart.

Anspruch 1 betrifft die Form der Reckstangenkuppe. Als solche wird hier und im Folgenden das dem Vorformling zuzuwendende Ende der Reckstange bezeichnet. Die Reckstangenkuppe gemäß Anspruch 1 unterscheidet sich in ihrer Form von der eines Kreiszylinders durch eine Mehrzahl von Erhebungen und/oder Vertiefungen in der Oberfläche. Der technische Effekt des so entstehenden Profils ist, dass das Vorformlingsmaterial im Kontaktbereich mit der Reckstangenkuppe auch nach deren Auftreffen auf den Vorformling nicht durch einen festen Kontaktrand fixiert wird, sondern zwischen den Erhebungen auf der Reckstangenkuppe bzw. in ihren Vertiefungen dehnbar bleibt. Eine fortgesetzte Einführbewegung der Reckstange und das Einblasen von Druckluft haben dann die Verstreckung dieses Zwischenraummaterials zur Folge. Durch die Verkleinerung des Kontaktbereichs wird auch der Haftwiderstand zwischen Reckstangenkuppe und Material vermindert, so dass das Material auch im Kontaktbereich über den Kuppenrand gleiten kann. Die Elastizität des in den Zwischenräumen gedehnten Materials bewirkt zudem eine zusätzliche Spannung, aufgrund der das Material unter der Reckstangenkuppe hinweggleitet. Insgesamt wird so die Materialausbeute im genannten Bereich verbessert.

Die Erhebungen und/oder Vertiefungen an der Reckstangenkuppe beeinflussen die Gestalt der sie betreffenden Querschnitte senkrecht zur Reckstangenlängsachse. Die genannten Erhebungen bzw. Vertiefungen können beispielsweise so angeordnet sein, dass polygonale Querschnittsflächen entstehen. Diese Variante hat den Vorteil einer einfachen Produktion der Reckstange. Die Wörter "Querschnitt" und "Querschnittsfläche" werden in dieser Schrift synonym verwendet.

Es können auch Querschnitte entstehen, die mehrere (z.B. zwei, drei, vier, fünf, sechs, sieben, acht, neun oder mehr) Fingerflächen umfassen. Derartige Querschnitte im Kontaktbereich von Reckstangenkuppe und Vorformlingsmaterial bewirken längliche Zwischenräume, an denen die Reckstange das Material nicht berührt oder zumindest weniger presst. In diesen länglichen Zwischenräumen kann das Material bei weiterer Einführbewegung der Reckstange besonders gut verstreckt werden. Dies gilt insbesondere, wenn die Fingerflächen radial verlaufen und/oder jeder Finger zumindest teilweise von zueinander parallelen Strecken berandet wird, weil das Material dann besonders gut nach außen entweichen kann.

Haben die Erhebungen auf der Reckstangenkuppe die Form von Wülsten, Halb- oder anderen Teilkugeln, so wird das Material an den entsprechenden Stellen nicht punktuell oder entlang einer Kante, sondern flächig zunächst berührt und dann relativ homogen zusammengedrückt. Dies bewirkt eine Verbesserung des Gleitens und damit eine Materialschonung. Erhebungen in Form von Noppen, Stegen oder Vorsprüngen sind relativ einfach auf der Reckstangenkuppe zu erzeugen.

Ebenso sind Vertiefungen durch Einschnitte, Rillen oder Löcher einfach in der Reckstangenkuppe einzubringen.

Die Erfindung betrifft auch Varianten, bei denen die Vertiefungen im Vergleich zur Kreiszylinderform durch Ein- oder Abschnitte entstehen und die zugehörigen Schnittflächen eine radiale Richtung (also senkrecht zur Reckstangenlängsache und auf diese zu) und/oder eine Richtung parallel zur Reckstangenlängsachse aufweisen. Diese Versionen zeichnen sich durch eine relativ einfache Herstellung der Reckstange aus.

Die Reckstange kann auch zu ihrer Kuppe hin teilweise weiter werden. Genauer bedeutet dies, dass die Reckstangenkuppe an einer Stelle einen Querschnitt hat, dessen maximaler radialer Randabstand zur Reckstangenlängsachse größer ist als der radiale Randabstand mindestens eines Querschnittes des restlichen Teils der Reckstange, also ohne die Kuppe. Als "maximaler radialer Randabstand" ist dabei der größte auftretende Abstand eines Randpunktes der Querschnittsfläche vom Durchstoßpunkt der Reckstangenlängsachse bezeichnet. Diese Version, bei der die Abweichung gegenüber der Kreiszylinderform als Erhebungen an dessen Mantelfläche in Erscheinung treten, kann den Vorteil einer Materialersparnis bei der Herstellung der Reckstange haben.

Im Bereich des Kontaktes mit dem Vorformling abgeflachte Ecken und Kanten der Reckstangenkuppe bewirken ein verbessertes Gleiten des Materials auf der Kuppe und damit dessen Schonung.

Erfindungsgemäß Befinden sich im Innern der Reckstange ein oder mehrere Strömungswege zurAb- oder Zuleitung von Druckgas.

Teil der Erfindung ist es auch, die Vertiefungen und/ oder Erhebungen in der Oberfläche der Reckstangenkuppe und die Aus- oder Eintrittsöffnungen der Strömungswege so aufeinander einzustellen, dass letztere durch die Vertiefungen bzw. den Raum zwischen den Erhebungen fortgesetzt werden. Die so entstehenden Verlängerungen werden jeweils zum Teil durch das Vorformlingsmaterial begrenzt. Der durchfließende Gasstrom (z.B. bei Druckgasabteitung) hat dann einen Kühleffekt an diesen und angrenzenden Stellen, der zur schnelleren Formstabilität insbesondere des Bodens führt.

Darüber hinaus betrifft die Erfindung ein Verfahren zur Umformung eines Vorformlings in einen Hohlkörper, bei dem eine Reckstange der oben beschriebenen Arten Verwendung findet. Die bereits genannten Vorteile solcher Reckstangen übertragen sich dann auf solche Verfahren.

Insbesondere kann das Verfahren vorsehen, dass die Reckstangenkuppe den Vorformling in dessen Innern berührt, während dieser außen gegen eine Bodenform stößt. Es tritt also ein gleichzeitiger Kontakt des Vorformlingsmaterials mit sowohl der Reckstange als auch der Bodenform auf. Dies kann beispielsweise zum Pressen des Materials zwischen den beidseitigen Kontaktflächen genutzt werden.

Eine besonders gute Materialausbeute wird erreicht, wenn die Reckstangenkuppe eine Art Gegenprofil zur Bodenform aufweist, wenn also die Anzahl der Erhebungen auf der Kuppe derjenigen der Senken in der Bodenform entspricht bzw. wenn die Anzahl der Vertiefungen an der Kuppe mit derjenigen der Erhebungen in der Bodenform übereinstimmt.

Eine Vorrichtung zur Blasumformung, die eine Reckstange der oben beschriebenen Arten umfasst, ist ebenfalls Teil der Erfindung und hat dann die beschriebenen Effekte der jeweils vorgesehenen Reckstangenkuppe.

In den Abbildungen sind einige Ausführungsbeispiele der Erfindung skizziert:
Fig. 1 a) bis d) zeigt vier Varianten von Erhebungen/ Vertiefungen auf der Reckstangenkuppe;
Fig.2 a), b) zeigt spezielle Arten möglicher Vertiefungen auf der Reckstangenkuppe;
Fig. 3 zeigt eine Reckstangenkuppe mit Erhebungen senkrecht zur Reckstangenlängsachse;
Fig. 4 a) und b) zeigt eine auf einen Vorformling treffende Reckstangenkuppe zu zwei Zeitpunkten, in Fig. 4 c) ist die entsprechende Sicht von unten dargestellt;
Fig. 5 a), b) zeigt zwei Varianten von Reckstangenkuppen, bei denen der durch die Vertiefungen entstehende Raum einen im Inneren der Reckstange verlaufenden Strömungsweg verlängert;
Fig. 6 zeigt eine Anordnung, bei der eine Reckstange einen Vorformling in Richtung einer Bodenform streckt und bei der die Vertiefungen der Reckstangenkuppe in Analogie zur Bodenform stehen.

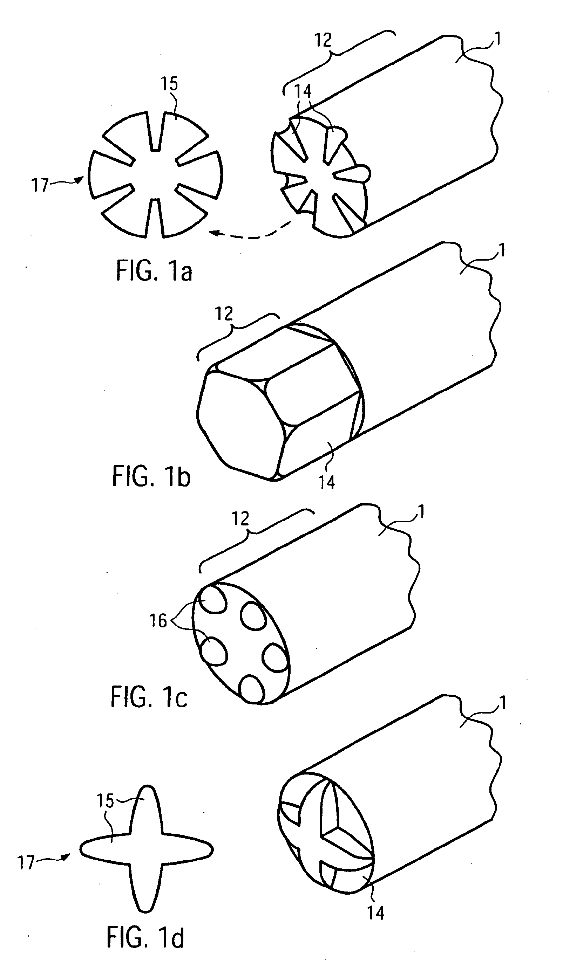

In den Figuren 1 a) - d) sind vier Möglichkeiten von Profilen von Reckstangenkuppen aufgezeigt. Im in Fig. 1 a) abgebildeten Ausführungsbeispiel sind sechs gleichmäßig angeordnete Vertiefungen 14 in Form radialer Einkerbungen vorgesehen. Dadurch hat die Reckstangenkuppe 12 an (insbesondere) einer Stelle einen ebenfalls abgebildeten Querschnitt 17 senkrecht zur Reckstangenlängsachse, der sechs radial nach außen verlaufenden Finger 15 aufweist. Die Finger verbreitern sich in radialer Richtung nach außen.

Bei der in Fig. 1 b) dargestellten Reckstange können die Vertiefungen 14 im Vergleich zur Kreiszylinderform als Vertiefungen gegenüber der Mantelfläche eines Kreiszylinders interpretiert werden. Durch die Abschnitte gegenüber der Kreiszylinderform, deren Schnittflächen eine parallel zur Reckstangenlängsachse verlaufende Richtung 23 aufweisen, hat die Reckstangenkuppe an (insbesondere) einer Stelle einen polygonalen Querschnitt. Die Ecken sind an der Stirnseite der Reckstange abgerundet. Die Erfindung kann aber auch nur solche Vertiefungen betreffen, die innerhalb der Endflächen der Reckstangenkuppe angeordnet sind (siehe z. B. Figuren 1a, 1d).

Fig. 1 c) zeigt eine Reckstangenkuppe 12, bei der sich fünf Halbkugeln an der Stirnseite der Reckstange in Richtung deren Längsachse erheben.

Die in Fig. 1 d) skizzierte Reckstangenkuppe hat an (insbesondere) einer Stelle einen Querschnitt 17 senkrecht zur Reckstangenlängsachse, der vier gleichmäßig angeordnete und radial nach außen verlaufende Finger aufweist. Diese werden nach außen hin schmaler. Die Ecken und Kanten an der Reckstangenkuppe sind im dargestellten Beispiel zum Teil abgerundet.

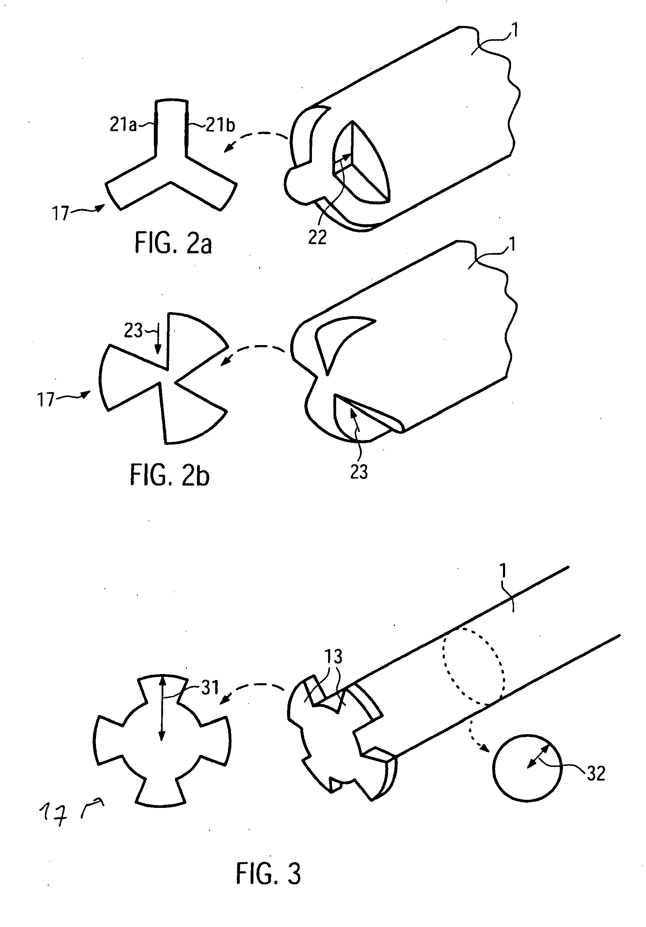

In Fig. 2 a) ist eine Reckstangenkuppe mit einem dreifingrigen Querschnitt 17 senkrecht zur Reckstangenlängsachse skizziert. Die Finger haben dabei jeweils zwei zueinander parallele Seiten 21 a und 21 b.

Die Vertiefungen an der Kuppe haben Schnittflächen, die eine Richtung 22 parallel zur Reckstangenlängsachse aufweist.

Fig. 2 b) zeigt eine Reckstangenkuppe mit Vertiefungen in Form von Einschnitten, bei denen einige Schnittflächen eine radiale Richtung 23 aufweisen.

In Fig. 3 ist eine Reckstangenkuppe zu sehen, die von der Kreiszylinderform durch Erhebungen 13 an der Mantelfläche des Kreiszylinders abweicht. Damit hat die Kuppe an einer Stelle einen Querschnitt 17, dessen maximaler radialer Randabstand 31 größer ist als der maximale radiale Randabstand 32 eines Querschnitts der Reckstange an einer Stelle, die vom dem Vorformling zuzuwendenden Ende weiter entfernt liegt.

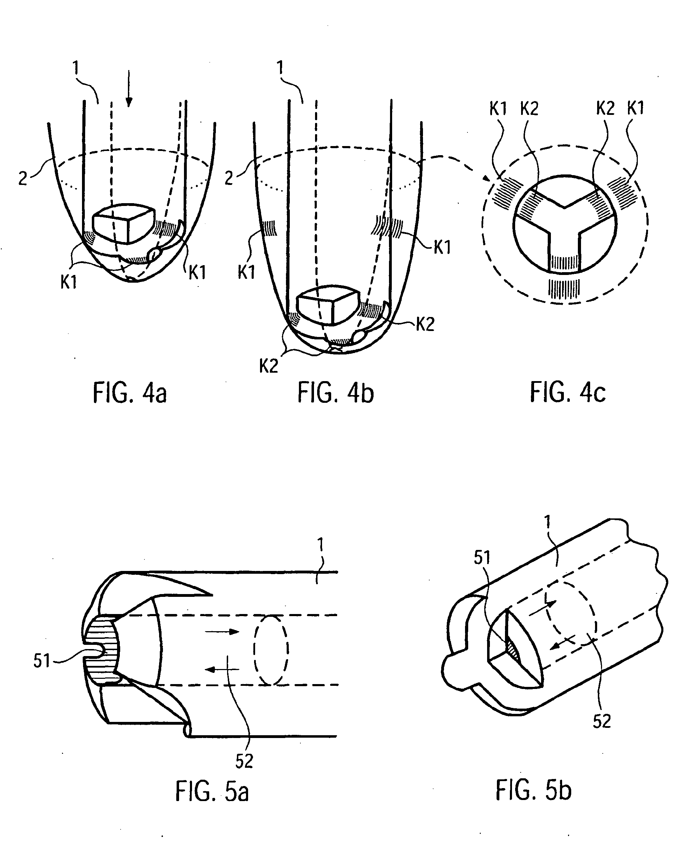

Das Auftreffen einer gemäß Fig. 2 geformten Reckstangenkuppe auf die konkave Innenseite eines Vorformlings 2 ist in Fig. 4 dargestellt, und zwar zu zwei Zeitpunkten der Einführbewegung der Reckstange. Die Kontaktstellen K1 zum früheren (Fig. 4 a)) und (K2) zum späteren (Fig. 4 b)) Zeitpunkt sind entsprechend markiert. Fig. 4 c) zeigt die Sicht von unten auf Vorformling und Reckstangenkuppe. Wie zu sehen ist, sind die Kontaktstellen K1 im Laufe des Streck- oder auch des Blasvorgangs nach außen gewandert. Dies weist darauf hin, dass das Vorformlingsmaterial auch im Bereich des anfänglichen Kontaktes mit der Kuppe verstreckt und nicht oder nur weniger fixiert wird.

In Fig. 5 a) und b) sind Reckstangenkuppen mit einer (Fig. 5 a) und drei (Fig. 5 b) Öffnungen 51 von im Innern der Reckstange verlaufenden Strömungswegen 52 skizziert. Dabei verlängert der durch die Vertiefungen entstehende Raum nach dem Auftreffen der Kuppe auf den Vorformling jeweils den Strömungsweg um das von den Einschnittsflächen und der Innenseite des Vorformlings berandete Stück. Der hindurchgeführte Gasstrom kühlt das noch warme Vorformlingsmaterial in diesem Bereich und bewirkt damit eine schnellere Stabilität des dann fertig geformten Hohlkörperbodens.

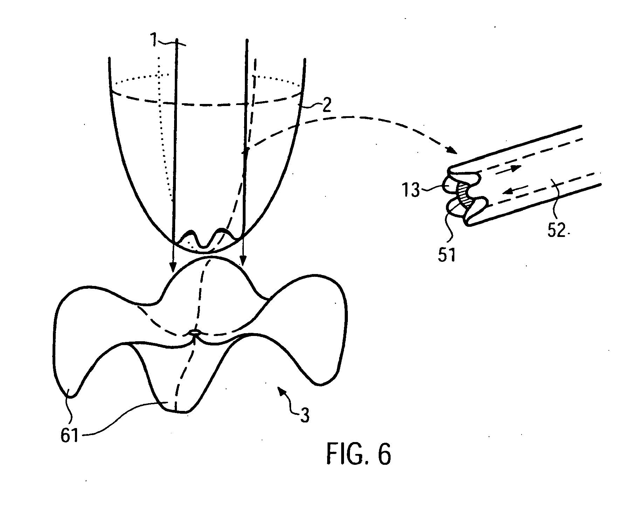

Fig. 6 zeigt eine Reckstangenkuppe 1 und einen von ihr gereckten Vorformling 2 kurz vor dessen Berühren einer Bodenform 3. Die Form der Reckstangenkuppe ist dabei der Bodenform insofern angepasst, als die Anzahl (hier fünf) der Erhebungen 13 in der Kuppe und die Anzahl der Senken 61 in der Bodenform bzw. die Anzahl der Vertiefungen in der Kuppe und die Anzahl der Erhöhungen in der Bodenform einander entsprechen. Wird dann die Reckstange so weit eingeführt, dass sie den Vorformling gegen die Bodenform drückt, so wird durch die geometrische Entsprechung der beiden Druckflächen eine relativ gleichmäßige Dicke des gepressten Materials erreicht. So kann eine gute Materialausbeute in diesem Bereich erreicht werden. Weiterhin kann eine durch die Form der Reckstangenkuppe bedingte Materialinhomogenität (z.B. hinsichtlich der Dicke) auf einem Kreisumfang des Vorformlings auch z.B. dazu ausgenutzt werden, relativ viel Vorformlingsmaterial in den Bereich der (unteren) Fußenden zu bringen oder auch in den Bereich zwischen zwei Füßen (Zugbänder).

Im skizzierten Beispiel befindet sich im Innern der Reckstange auch noch ein Strömungsweg 52 zum Einleiten oder Ablassen von Druckgas, und die durch die Vertiefungen entstehenden Zwischenräume bewirken beim Kontakt mit dem Vorformling eine Verlängerung des Strömungsweges mit dem oben geschilderten Effekt.

Eine Vorrichtung zur Herstellung von Hohlkörpern umfasst eine Blasstation, an der mindestens ein zuvor erwärmter Vorformlings in eine Form eingesetzt und durch Einführen einer Reckstange gereckt wird. Zur Vorrichtung gehört zudem eine Apparatur, mit der (z.B. durch Einleitung von Gas) eine positive Druckdifferenz zwischen Innerem und Äußerem des Vorformlings erzeugt wird, aufgrund der sich der Vorformling in der jeweiligen Form maximal ausbreitet. Eine solche Vorrichtung ist in keiner der Figuren 1-6 vollständig abgebildet. Es ist jeweils lediglich die für die Erfindung relevante Reckstangenkuppe in einigen möglichen Versionen gezeigt, und zwar zum Teil in Verbindung mit dem berührten Vorformling 2 (Fig. 4 a-c und Fig. 6) oder mit einem Boden 3 der (Hohlkörper-) Form (Fig. 6).

Ein Verfahren zur Herstellung von Hohlkörpern beinhaltet das Erwärmen (mindenstens) eines Vorformlings, dessen Einsetzen in eine Form, das Erzeugen einer Druckdifferenz wie oben beschrieben und das Einführen einer Reckstange in den in der Form befindlichen Vorformling. Das Verfahren kann auch das Ermöglichen eines Druckausgleichs (nach erfolgter maximaler Ausbreitung des Vorformlings in der Form) durch Strömungswege im Innern der Reckstange umfassen. Im die Erfindung betreffenden Verfahren hat die Reckstangenkuppe dabei eine Geometrie wie oben beschrieben.

## Patentansprüche

1. Reckstange (1) zum Gebrauch bei der Umformung eines Vorformlings in einen Hohlkörper, wobei die Reckstangenkuppe (12), also das dem Vorformling zuzuwendende Ende der Reckstange, gegenüber der Kreiszylinderform eine Mehrzahl von Erhebungen (13) und/oder Vertiefungen (14) in der Oberfläche aufweist, wodurch die Reckstange an mehreren voneinander getrennten Stellen mit der konkaven Innenseite des Vorformlings Kontakt bekommen kann,
**dadurch gekennzeichnet, dass** sich an der Reckstangenkuppe (12) eine oder mehrere Öffnungen (51) eines oder mehrerer im Innern der Reckstange verlaufender Strömungswege (52) befinden, durch die Gas durch die Reckstange hindurch ein- oder abgeleitet werden kann,
wobei der Raum zwischen den Erhebungen bzw. der durch die Vertiefungen entstehende Raum den oder die Strömungswege (52) verlängert.

2. Reckstange gemäß Anspruch 1, **dadurch gekennzeichnet, dass** ihre Kuppe (12) an einer Stelle einen polygonalen Querschnitt senkrecht zur Reckstangenlängsachse aufweist.

3. Reckstange gemäß Anspruch 1 oder 2, **dadurch gekennzeichnet, dass** ihre Kuppe (12) an einer Stelle einen Querschnitt (17) senkrecht zur Reckstangenlängsachse aufweist, dessen Fläche zwei, drei, vier, fünf, sechs, sieben, acht, neun oder mehr regelmäßig oder unregelmäßig angeordnete Finger (15) aufweist.

4. Reckstange gemäß Anspruch 3, **dadurch gekennzeichnet, dass** die Finger (15) radial nach außen verlaufen.

5. Reckstange gemäß Anspruch 3, **dadurch gekennzeichnet, dass** jeder Finger (15) jeweils zumindest teilweise, beispielsweise an seinem äußeren Ende, zwei zueinander parallele Seiten (21 a, 21 b) hat.

6. Reckstange gemäß einem der Ansprüche 1 bis 5, **dadurch gekennzeichnet, dass** einige oder alle Erhebungen (13) die Form von Halbkugeln (16), Wülsten, und/oder Vorsprüngen haben.

7. Reckstange gemäß einem der Ansprüche 1 bis 5, **dadurch gekennzeichnet, dass** einige oder alle Vertiefungen (14) die Form von Einschnitten, Rillen oder Löchern haben.

8. Reckstange gemäß einem der Ansprüche 1 bis 7, **dadurch gekennzeichnet, dass** die Vertiefungen (14) im Vergleich zur Kreiszylinderform durch Ein- oder Abschnitte derart entstehen, dass mindestens eine Schnittfläche eine Richtung (22) parallel zur Reckstangenlängsachse und/oder eine radiale, d.h. auf die Reckstangenlängsachse weisende Richtung (23) aufweist.

9. Reckstange gemäß einem der Ansprüche 1 bis 8, **dadurch gekennzeichnet, dass** die Reckstangenkuppe (12) an einer Stelle einen Querschnitt (17) hat, dessen maximaler radialer Randabstand (31) zur Reckstangenlängsachse größer ist als der radiale Randabstand (32) mindestens eines Querschnittes des restlichen Teils, also ohne die Kuppe, der Reckstange.

10. Reckstange gemäß einem der Ansprüche 1 bis 9, **dadurch gekennzeichnet, dass** einige oder alle Kanten und/oder Ecken der Reckstangenkuppe, insbesondere an den Stellen, die mit der konkaven Innenseite des Vorformlings Kontakt bekommen können, abgerundet sind.

11. Verfahren zur Umformung eines Vorformlings in einen Hohlkörper, **gekennzeichnet durch** die Verwendung einer Reckstange gemäß einem der Ansprüche 1 bis 10.

12. Verfahren gemäß Anspruch 11, **dadurch gekennzeichnet, dass** das Vorformlingsmaterial (2), das sich zu einem Zeitpunkt zwischen Reckstange (1) und Bodenform (3) befindet, sowohl von der Reckstange als auch von der Bodenform berührt wird.

13. Verfahren gemäß Anspruch 12, **dadurch gekennzeichnet, dass** die Ab- oder Zuleitung von Gas durch die verlängerten Strömungswege (52) zur Kühlung des Hohlkörperbodens während seines gleichzeitigen Berührens von Reckstange und Bodenform genutzt wird.

14. Verfahren gemäß einem der Ansprüche 11 bis 13, **dadurch gekennzeichnet, dass** die Anzahl der Erhebungen (13) bzw. Vertiefungen (14) der verwendeten Reckstange (1) der Anzahl der Vertiefungen (61) bzw. Erhebungen im Profil der verwendeten Bodenform (3) entspricht.

15. Vorrichtung zur Umformung eines Vorformlings in einen Hohlkörper, **gekennzeichnet durch** eine Reckstange gemäß einem der Ansprüche 1 bis 10.

## Claims

1. Drawing rod (1) used for shaping a preform into a hollow body, wherein the drawing rod tip (12), in other words the end of the drawing rod facing the preform, has a plurality of elevations (13) and/or recesses (14) in the surface relative to the circular cylindrical shape by means of which the drawing rod is able to come into contact with the concave internal face of the preform at several mutually separate points,
**characterised in that** one or more openings (51) of one or more flow passages (52) extending through the interior of the drawing rod are located at the drawing rod tip (12), by means of which gas can be fed into or out of the drawing rod,
and the space between the elevations respectively the space created by the recesses extends the flow passage or passages (52).

2. Drawing rod as claimed in claim 1, **characterised in that** its tip (12) has a polygonal cross-section perpendicular to the drawing rod longitudinal axis at one point.

3. Drawing rod as claimed in claim 1 or 2, **characterised in that** its tip (12) has a cross-section (17) perpendicular to the drawing rod longitudinal axis at one point, the surface of which has two, three, four, five, six, seven, eight, nine or more regularly or irregularly disposed fingers (15).

4. Drawing rod as claimed in claim 3, **characterised in that** the fingers (15) extend radially outwards.

5. Drawing rod as claimed in claim 3, **characterised in that** at least part of each finger (15) respectively has two mutually parallel sides (21 a, 21 b), for example at its outer end.

6. Drawing rod as claimed in one of claims 1 to 5, **characterised in that** some or all of the elevations (13) have the shape of half-spheres (16), beads and/or projections.

7. Drawing rod as claimed in one of claims 1 to 5, **characterised in that** some or all of the recesses (14) have the shape of notches, grooves or holes.

8. Drawing rod as claimed in one of claims 1 to 7, **characterised in that** the recesses (14) are created by indentations or cut-outs relative to the circular cylindrical shape such that at least one cut surface has a direction (22) parallel with the drawing rod longitudinal axis and/or a radial direction (23), i.e. pointing towards the drawing rod longitudinal axis.

9. Drawing rod as claimed in one of claims 1 to 8, **characterised in that** the drawing rod tip (12) has a cross-section (17) at one point, the maximum radial peripheral distance (31) of which from the drawing rod longitudinal axis is longer than the radial peripheral distance (32) of at least a cross-section of the remaining part of the drawing rod, i.e. not incorporating the tip.

10. Drawing rod as claimed in one of claims 1 to 9, **characterised in that** some or all of the edges and/or corners of the drawing rod tip are rounded, in particular at points which are able to make contact with the concave internal face of the preform.

11. Method of shaping a preform into a hollow body, **characterised by** the use of a drawing rod as claimed in one of claims 1 to 10.

12. Method as claimed in claim 11, **characterised in that** the preform material (2) disposed between the drawing rod (1) and base mould (3) is contacted by both the drawing rod and the base mould at one instant.

13. Method as claimed in claim 12, **characterised in that** gas is fed out of or into the extended flow passages (52) as a means of cooling the hollow body base whilst it is simultaneously being contacted by the drawing rod and base mould.

14. Method as claimed in one of claims 11 to 13, **characterised in that** the number of elevations (13) respectively recesses (14) of the drawing rod (1) used corresponds to the number of recesses (61) respectively elevations in the profile of the base mould (3) used.

15. Device for shaping a preform into a hollow body, **characterised by** a drawing rod as claimed in one of claims 1 to 10.

## Revendications

1. Tige d'étirage (1) à utiliser lors de la transformation d'une ébauche en corps creux, étant précisé que le sommet (12), c'est-à-dire l'extrémité de la tige d'étirage à tourner vers l'ébauche, présente par rapport à la forme cylindrique ronde plusieurs parties saillantes (13) et/ou creux (14) dans sa surface, moyennant quoi la tige d'étirage peut venir en contact à plusieurs endroits séparés les uns des autres avec la face intérieure concave de l'ébauche,
**caractérisée en ce qu'**il y a sur le sommet (12) de la tige d'étirage une ou plusieurs ouvertures (51) d'une ou plusieurs voies d'écoulement (52) s'étendant à l'intérieur de la tige d'étirage, par lesquelles du gaz peut traverser la tige d'étirage ou être évacué,
étant précisé que l'espace entre les parties saillantes ou l'espace formé entre les creux allonge la ou les voies d'écoulement (52).

2. Tige d'étirage selon la revendication 1, **caractérisée en ce que** son sommet (12) présente à un endroit une section transversale polygonale perpendiculairement à l'axe longitudinal de la tige d'étirage.

3. Tige d'étirage selon la revendication 1 ou 2, **caractérisée en ce que** son sommet (12) présente à un endroit une section transversale (17), perpendiculairement à l'axe longitudinal de la tige d'étirage, dont la surface présente deux, trois, quatre, cinq, six, sept, huit, neuf doigts (15), ou plus, qui sont disposés régulièrement ou irrégulièrement.

4. Tige d'étirage selon la revendication 3, **caractérisée en ce que** les doigts (15) s'étendent radialement vers l'extérieur.

5. Tige d'étirage selon la revendication 3, **caractérisée en ce que** chaque doigt (15) a au moins en partie, par exemple à son extrémité extérieure, deux côtés (21a, 21b) parallèles.

6. Tige d'étirage selon l'une des revendications 1 à 5, **caractérisée en ce que** quelques parties saillantes (13) ou toutes les parties saillantes (13) ont la forme d'hémisphères (16), de bourrelets et/ou de saillies.

7. Tige d'étirage selon l'une des revendications 1 à 5, **caractérisée en ce que** quelques creux ou tous les creux (14) ont la forme d'entailles, de rainures ou de trous.

8. Tige d'étirage selon l'une des revendications 1 à 7, **caractérisée en ce que** les creux (14) se forment par rapport à la forme cylindrique ronde grâce à des entailles ou des sections de telle sorte qu'au moins une surface de coupe présente une direction (22) parallèle à l'axe longitudinal de la tige d'étirage et/ou une direction (23) radiale, c'est-à-dire dirigée vers l'axe longitudinal de la tige d'étirage.

9. Tige d'étirage selon l'une des revendications 1 à 8, **caractérisée en ce que** le sommet de tige d'étirage (12) présente à un endroit une section transversale (17) dont l'écartement radial maximal (31) par rapport à l'axe longitudinal de la tige d'étirage est supérieur à l'écartement radial (32) d'au moins une section transversale du reste de la tige d'étirage, c'est-à-dire sans le sommet.

10. Tige d'étirage selon l'une des revendications 1 à 9, **caractérisée en ce que** quelques arêtes et/ou quelques coins ou toutes les arêtes et/ou tous les coins du sommet de la tige d'étirage sont arrondis en particulier aux endroits qui peuvent venir en contact avec la face intérieure concave de l'ébauche.

11. Procédé pour transformer une ébauche en corps creux, **caractérisé par** l'utilisation d'une tige d'étirage selon l'une des revendications 1 à 10.

12. Procédé selon la revendication 11, **caractérisé en ce que** le matériau d'ébauche (2) qui se trouve un instant entre la tige d'étirage (1) et le moule de fond (3) est touché à la fois par la tige d'étirage et par le moule de fond.

13. Procédé selon la revendication 12, **caractérisé en ce que** l'évacuation ou l'amenée de gaz par les voies d'écoulement allongées (52) est utilisée pour refroidir le fond du corps creux pendant que celui-ci touche en même temps la tige d'étirage et le moule de fond.

14. Procédé selon l'une des revendications 11 à 13, **caractérisé en ce que** le nombre de parties saillantes (13) ou de creux (14) de la tige d'étirage (1) utilisée correspond au nombre de creux (61) ou de parties saillantes dans le profil du moule de fond (3) utilisé.

15. Dispositif pour transformer une ébauche en corps creux, **caractérisé par** une tige d'étirage selon l'une des revendications 1 à 10.
